# EUROPÄISCHE PATENTANMELDUNG

(11) **EP 0 937 594 A1**
(43) Veröffentlichungstag der Anmeldung: **25.08.1999**
(21) Anmeldenummer: 99101204.8
(22) Anmeldetag: 22.01.1999
(51) Int. Cl.: B60G 21/055

(54) **Fahrzeugachse mit mindestens einem Drehstabstabilisator mit längsführenden Schenkeln**

(30) Priorität: 20.02.1998 DE 19807128
(71) Anmelder: DaimlerChrysler AG, 70567 Stuttgart (DE)
(72) Erfinder: Encke, Ernst-Ekkehard, 73776 Altbach (DE)

(57) **Zusammenfassung**

Die Erfindung betrifft eine Einzelradaufhängung für eine Fahrzeugachse mit mindestens einem radführenden Lenker (23,33) pro Radträger (20,30) und mindestens einem im wesentlichen u-förmigen Drehstabstabilisator (10), dessen Schenkel (12,13) einen Teil der Längsführung der Fahrzeugachse übernehmen und dessen zwischen den Schenkeln (12,13) liegender, annähernd quer zur Fahrtrichtung (9) ausgerichteter Drehstababschnitt (11) mindestens die Länge der halben Spurweite hat. Jeder der beiden Schenkel (12,13) wird direkt am entsprechenden Radträger (20,30) angelenkt. Dabei ist er Teil eines radführenden, rad- und aufbauseitig gelagerten Lenkers (23,33) oder er ist zumindest an einem radführenden Lenker (23,33) mindestens an einer Stelle starr befestigt.

Mit der vorliegenden Erfindung wird eine Fahrzeughinterachse geschaffen, in der ein Stabilisator (10) so integriert ist, daß zum einen gegenüber herkömmlichen Konstruktionen Bauteile eingespart werden und zum andern das Fahrverhalten durch die Integration positiv beeinflußt wird.

## Beschreibung

Die Erfindung betrifft eine Einzelradaufhängung für eine Fahrzeugachse mit mindestens einem radführenden Lenker pro Radträger und mindestens einem im wesentlichen u-förmigen Drehstabstabilisator, dessen Schenkel einen Teil der Längsfuhrung der Fahrzeugachse übernehmen und dessen zwischen den Schenkein liegender, annähernd quer zur Fahrtrichtung ausgerichteter Drehstababschnitt mindestens die Lange der halben Spurweite hat.

Eine derartige Einzelradaufhängung ist aus der Literaturstelle "Fahrwerktechnik: Radaufhängungen" von Jörnsen Reimpel, Auflage 1988 des Vogel-Buchverlags, Würzburg, bekannt. Auf den Seiten 262 und 263 ist eine Audi 100-Vorderachse dargestellt und beschrieben, bei der ein Bügelstabilisator die untere Längsfunrung der Achse übernimmt. Der Bügelstabilisator ist über zwei Stützlager am Fahrzeugaufbau gelagert.
Die Audi 100-Vorderachse hat den Nachteil, daß sich beim Einfedern erhebliche Vorspuränderungen einstellen, die sich beispielsweise bei einer angetriebenen, ungelenkten Hinterachse besonders negativ auf das Fahrverhalten auswirken.

Der vorliegenden Erfindung liegt das Problem zugrunde, in eine Fahrzeughinterachse mit einzeln aufgehängten Rädern einen Stabilisator so zu integrieren, daß zum einen gegenüber herkömmlichen Konstruktionen Bauteile eingespart werden und zum andern das Fahrverhalten durch die Integration positiv beeinflußt wird.

Das Problem wird mit den Merkmalen des Hauptanspruchs gelöst. Die Fahrzeugachse erhalt einen Drehstabstabilisator, dessen Schenkel ohne Einschränkung der Stabilisatorwirkung einen Teil der Längsführung übernehmen. Jeder der beiden Schenkel wird direkt am entsprechenden Radträger angelenkt. Dabei ist er Teil eines radführenden, rad- und aufbauseitig gelagerten Lenkers oder er ist zumindest an einem radführenden Lenker mindestens an einer Stelle starr befestigt.

Die Schenkel des Stabilisators haben als Teil der Lenker u.a. eine uneingeschränkte Lenkerfunktion. Sie führen im Rahmen der Lenkerabstimmung das entsprechende Rad ohne jeglichen Nachteil, der sich durch ihre Doppelfunktion ergeben könnte. Sie haben zwischen dem Radträger und der aufbauseitigen Anlenkung eine reine Lenkerfunktion.
Dies gilt auch für den Fall, daß die Schenkel an zwei regulären Lenkern befestigt sind.

Die Doppelfunktion der Stabilisatorschenkel bedingt zum einen eine Gewichtsreduktion sowie kürzerer Fertigungs- und Montageseiten und zum anderen bei einer angetriebenen und ungelenkten Hinterachse eine Verbesserung des Fahrverhaltens. Die relativ steife Kopplung der beiden Räder über den Stabilisator bewirkt u.a. ein für das Fahrverhalten positives Wankuntersteuern.

Weitere Einzelheiten der Erfindung ergeben sich aus den nicht zitierten Unteransprüchen und der nachfolgenden Beschreibung einer schematisch dargestellten Ausführungsform:
- Figur 1:: Einzelradaufhängung mit einem vor der Achse liegenden U-Stabilisator;
- Figur 2:: Befestigung des U-Stabilisators an einem Längslenker.

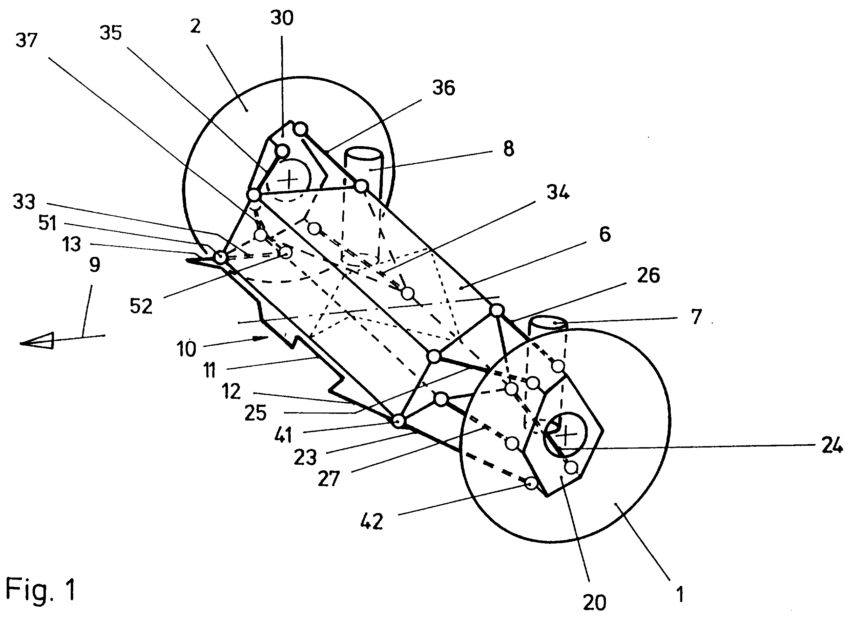

Die Figur 1 zeigt eine schematisch dargestellte Raumlenkerachse. Diese Achse ist eine vormontierbare Einheit, die u.a. einen Fahrschemel (6) die Lenker (23-37), die Schraubenfedern (7, 8), die Radträger (20, 30) und die Räder (1, 2) umfaßt.

Der Fahrschemel (6) ist in der Regel an mehreren Punkten elastisch am nicht dargestellten Fahrzeugaufbau gelagert. Zwischen dem Fahrschemel (6) und den die Räder (1, 2) lagernden Radträgern (20, 30) sind die Lenker (23-37) angeordnet. Jedes Rad (1, 2) ist von zwei Längslenkern (23, 33; 25, 35), zwei Querlenkern (24, 34; 26, 36) und einem fünften Lenker (27, 37) gelenkig geführt.

Am Rad (1) bilden die Längslenker eine Schubstrebe (23) und eine Zugstrebe (25), wobei die Zugstrebe (25) über der Schubstrebe (23) angeordnet ist. Die Querlenker sind der Federlenker (24) und die Sturzstrebe (26). Auf dem relativ tief liegenden Federlenker (24) stützt sich die Schraubenfeder (7) und ein nicht dargestellter Dämpfer ab. Die Schubstrebe (23) und der Federlenker (24) bilden zusammen eine untere Schräglenkung, wahrend die Zugstrebe (25) und die Sturzstrebe (26) eine obere Schräglenkung darstellen. Bei dieser Lenkeranordnung wandern die Räder beispielsweise beim Einfedern nach hinten und beim Ausfedern nach vorn. Der fünfte Lenker (27), der annähernd in der Höhe der Radmitte liegt, ist eine Spurstrebe, die weitgehend jede kinematische Vorspuränderung ausschließt.

Bei der in Figur 1 dargestellten Hinterachskonstruktion liegt der U-Stabilisator (10) in Fahrtrichtung (9) gesehen vor der Achse. Der Stabilisator (10) besteht aus einem beispielsweise mehrfach gekröpften mittleren Drehstababschnitt (11) und den beidseitig daran anschließenden Schenkeln (12, 13), wobei jeder Schenkel einen Längslenker (23, 33) ersetzt. Jeder Schenkel (12, 13) ist somit zum einen an einer Anlenkstellen (41, 51) am Fahrschemel (6) und zum anderen an einer Gelenkstelle (42, 52) am Radträger (20, 30) angelenkt. Hierdurch haben die Schenkel (12, 13) die Funktion von den bisherigen unteren Längslenkern (23, 33) und die Funktion als Hebelarme eines Stabilisators (10). Außer den Anlenkstellen (41, 51) hat der Stabilisator (10) keine Berührungspunkte mit dem Fahrschemel (6) oder dem Fahrzeugaufbau.

Da die unteren Längslenker bzw. Schenkel über die Verbindung durch den Drehstab (11) hier ein Bauteil darstellen, bewegen sich die Räder (1, 2) stärker synchron als ohne diesen neuen Stabilisator. Bei einer Kurvenfahrt vergrößert sich dadurch die konstruktionsbedingte Tendenz des Gegenlenkens der Hinterachse. Das kurvenäußere Rad wird in Vorspur gezwungen und drückt durch Kopplung über den Drehstab (11) das kurveninnere Rad in Nachspur, so daß sich das wankuntersteuernde Mitlenken der Hinterachse verstärkt.

Der dargestellte U-Stabilisator (10), der auch als Bügelstabilisator bezeichnet werden kann, ist beispielsweise aus einem ca. 20 mm starken kaltgebogenen Federstahl hergestellt. Im Bereich zwischen dem mittleren Drehstababschnitt (11) und den Schenkeln (12, 13) ist er mehrfach gebogen, um möglichst nahe am Fahrschemel (6) entlang geführt werden zu können. Auch im mittleren Bereich ist er viermal gebogen, um unter der nicht dargestellten Antriebswelle vorbeigeführt werden zu können. Die Ausformung nach unten hat den Vorteil, den Drehstab im Falle einer Beschädigung mit einfachen Mitteln ohne Demontage des Fahrschemels ersetzen zu können.

Im Bereich zwischen den Anlenkstellen (41, 51) und dem Drehstababschnitt (11) sind beispielhaft nach Figur 1 die Schenkel (12, 13) des U-Stabilisators (10) annähernd geradlinig verlängert, so daß der jeweils erste Knick erst einige Zentimeter in Fahrtrichtung (9) vor der entsprechenden Anlenkstelle (41) oder (51) liegt.

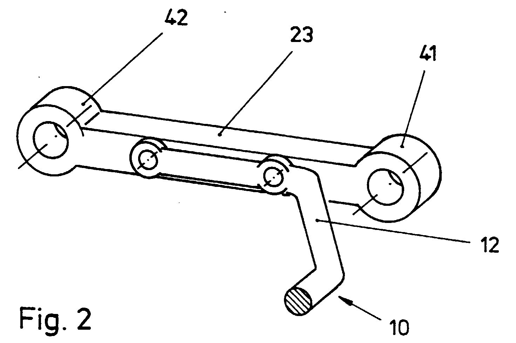

Figur 2 zeigt einen an einer Schubstrebe (23) befestigten Stabilisator (10). Die Schubstrebe (23) ist mit ihrer radträgerseitigen Gelenkstelle (42) und ihrer fahrschemelseitigen Anlenkstelle (41) dargestellt. An ihrer zur Fahrzeugmitte ausgerichtenten Seitenfläche ist der Schenkel (12) des U-Stabilisators (10) angeordnet. Die Befestigung zwischen beiden Teilen (12, 23) erfolgt hier durch Anschrauben. Im Bereich der Anschraubstellen sind die Schenkel (12, 13) flachgeschmiedet, um eine sichere Anlage an der Schubstrebe (23) zu erhalten.

Alternativ können die Schenkel (12, 13) auch mit Schellen, Bügeln oder dergleichen kraft- und/oder formschlüssig befestigt sein. Ebenso kann der Schenkel (12, 13) zur Bildung der hinteren Befestigungsstelle an seinem freien Ende um 90° gekröpft sein, wobei das gekröpfte Ende in eine Querbohrung der Schubstrebe (23) hineinragt und dort in der Bohrung gegebenenfalls verstemmt ist.

### Bezugszeichenliste

- 1, 2: Räder
- 6: Fahrschemel
- 7, 8: Schraubenfedern
- 9: Fahrtrichtung
- 10: Drehstabstabilisator, U-Stabilisator,
- 11: mittlerer Drehstabanteil
- 12, 13: Schenkel von (10)
- 20, 30: Radträger
- 23, 33: Schubstreben, Längslenker
- 24, 34: Federlenker, Querlenker
- 25, 35: Zugstrebe, Längslenker
- 26, 36: Sturzstrebe, Querlenker
- 27, 37: Spurstrebe
- 41, 51: Anlenkstellen an (6)
- 42, 52: Gelenkstelle an (20) bzw. (30)

## Patentansprüche

1. Einzelradaufhängung für eine in einem Fahrschemel (6) am Fahrzeugaufbau elastisch gelagerte Fahrzeugachse mit mindestens vier radführenden Lenkern pro Radträger (20, 30) und mindestens einem im wesentlichen u-förmigen Drehstabstabilisator (10),
- dessen einzelne Schenkel (12, 13), einen Teil der Langsführung der Fahrzeugachse übernehmend, direkt am Radträger (20, 30) angelenkt sind, wobei sie Teil eines radführenden, rad- und fahrschemelseitig gelagerten Lenkers (23, 33 oder 25, 35) sind oder zumindest jeweils an den radführenden Lenkern (23, 33 oder 25, 35) wenigstens jeweils an einer Stelle starr befestigt sind und
- dessen zwischen den Schenkeln (12, 13) liegender, annähernd quer zur Fahrtrichtung ausgerichteter Drehstababschnitt (11) mindestens die Länge der halben Spurweite hat.

2. Einzelradaufhängung nach Anspruch 1, dadurch gekennzeichnet, daß alle Lenker (23-27; 33-37) der Fahrzeugachse in Schwenk- und/oder Kugelgelenken geführt sind, wobei die Schenkel (12, 13) des U-Stabilisators (10) einen Anteil der Längslenker (23, 33) oder (25, 35) bilden.

3. Einzelradaufhängung nach Anspruch 1, dadurch gekennzeichnet, daß die Schenkel (12, 13) des U-Stabilisator (10) annähernd geradlinig über ihre aufbauseitigen Anlenkpunkte und den reinen Lenkerbereich hinaus verlängert sind.

4. Einzelradaufhängung nach Anspruch 1, dadurch gekennzeichnet, daß der U-Stabilisator (10) in Fahrtrichtung gesehen vor der Fahrzeugachse liegt.

5. Einzelradaufhängung nach Anspruch 1, dadurch gekennzeichnet, daß der U-Stabilisator (10) Teil einer Hinterachse ist.
